# EUROPÄISCHE PATENTSCHRIFT

(11) **EP 3 273 205 B1**
(45) Veröffentlichungstag und Bekanntmachung des Hinweises auf die Patenterteilung: **20.11.2019**
(21) Anmeldenummer: 16179958.0
(22) Anmeldetag: 18.07.2016
(51) Int. Cl.: G01F 1/66

(54) **VERFAHREN UND ANORDNUNG ZUR ULTRASCHALL-CLAMP-ON-DURCHFLUSSMESSUNG UND KÖRPER ZUR REALISIERUNG DER MESSUNG**
METHOD AND ASSEMBLY FOR ULTRASOUND CLAMP ON FLOW MEASUREMENT AND BODY FOR REALIZING THE MEASUREMENT
PROCÉDÉ ET SYSTÈME DE DÉBITMETRE À ULTRASONS CLAMP-ON ET CORPS DESTINÉ À RÉALISER LA MESURE

(43) Veröffentlichungstag der Anmeldung: 24.01.2018
(73) Patentinhaber: FLEXIM FLEXIBLE INDUSTRIEMESSTECHNIK GMBH, 12681 Berlin (DE)
(72) Erfinder: Hoheisel, Dr., Gerald, 12159 Berlin (DE)
(74) Vertreter: Garrels, Sabine

(56) Entgegenhaltungen:
- WO-A2-2006/007716
- DE-A1- 19 503 714
- DE-A1-102004 053 673
- DE-A1-102011 079 250
- GB-A- 2 521 661
- US-A- 4 400 803
- US-A1- 2011 132 102

## Beschreibung

Die Erfindung betrifft ein Verfahren und eine Anordnung zur Ultraschall-Clamp-on-Durchflussmessung unter zu Hilfenahme einer Messung von Off-Center-Schallpfaden, wobei Clamp-On-Ultraschallwandler auf einem Zwischenstück eines Prozessrohres, einem im Folgenden genannten Spool Piece, befestigt sind. Die Erfindung betrifft weiterhin Körper zur Realisierung der Messung.

Ultraschall-Clamp-on-Durchflussmessgeräte finden breiten Einsatz in vielen Bereichen der Industrie. Einer ihrer wesentlichen Vorteile besteht darin, dass die Durchflussmessung berührungslos stattfindet. Bei Ultraschall-Clamp-on-Durchflussmessgeräten nach dem Laufzeitverfahren wird die Laufzeitdifferenz zweier sich in bzw. gegen die Strömung ausbreitender Schallsignale gemessen und daraus der Volumenstrom berechnet. Dazu werden zwei Schallwandler auf der Rohrwand befestigt, die beide als Sender und als Empfänger betrieben werden können. Ein Schallwandler besteht aus einem aktiven Element wie z.B. einer Piezokeramik, das auf einem sogenannten Schallwandlervorlauf so angeordnet ist, dass die Schallausbreitung unter einem Einstrahlwinkel erfolgt. Die Erzeugung der Anregungsimpulse für die Schallwandler und die Auswertung der Empfangssignale der Schallwandler erfolgt im Messumformer. Dieser stellt für jeden Schallwandler einen Messkanal bereit. Die Laufzeitdifferenz hängt u.a. von der mittleren Strömungsgeschwindigkeit auf dem Schallpfad, sowie der Schallaufzeit im Fluid ab.

Für die Berechnung des Volumenstromes muss aus einem Pfadintegral auf ein Flächenintegral approximiert werden. Dies kann zu Fehlern in der Berechnung führen, gerade wenn das Strömungsprofil Inhomogenitäten aufweist, welche beispielsweise durch Krümmer, Blenden, Flansche und/oder durch Schweißnähte im Rohr ausgelöst werden. Zudem ist das Strömungsprofil abhängig von Viskosität und Strömungsgeschwindigkeit des Mediums und kann sich laminar und turbulent ausbilden, auch wenn turbulent der Regelfall ist.

Der Stand der Technik offenbart einige Ansätze diese Approximationsfehler zu umgehen.

Es gibt Formeln, welche zusätzliche strömungsmechanische Kenngrößen bei der Approximation vom Pfadintegral auf das Flächenintegral berücksichtigen. Nachteilig hierbei ist, dass diese Kenngrößen nicht immer zur Verfügung stehen.

Weiterhin kann verzerrten Strömungsprofilen durch mehrkanalige Messanordnungen in verschiedenen Messebenen entgegengewirkt werden.

Weiterhin können lange Ein- und Auslaufstrecken vorgegeben werden, die das gestörte Strömungsprofil entstören.

Ultraschall-Inline-Geräte, welche für die Messungen im Rohr installiert sind und dadurch eine höhere Genauigkeit erzielen können, werden beispielsweise als Mehrstrahlanordnungen eingesetzt, um weitere Pfadintegrale zu messen, welche nicht durch das Zentrum des runden Rohres verlaufen (z.B. bei Krohne DE 102007004936 A1). Diese Pfadintegrale werden im Folgenden Off-Center-Schallpfade genannt. Bei einer Inline-Ultraschallanordnung tritt der Schall direkt gerichtet aus den Schallwandlern ins Messmedium aus und wieder ein und verwendet keinen Schallwandlervorlauf und nicht die normale Rohrwand zum Ein/Auskoppeln des Schallsignals.

Bei der Verwendung von Clamp-On-Ultraschallmesssensoren können aufgrund des Snellius-Brechungsgesetzes keine Off-Center-Schallpfade gemessen werden. Durch die hohen Schallgeschwindigkeitsunterschiede von Rohrwand und Prozessmedium (Stahl ca. 3000 m/s für Scherwellen und Flüssigkeiten von 1000 bis 2000 bei Gasen <1000) sind die möglichen Austrittswinkel aus dem Messmedium in das Rohr begrenzt. Nur kleine Winkel außerhalb des direkten normalen (senkrechten) Austritts sind möglich. Damit sind bei einem runden Rohr nur Pfadintegrale, welche durch das Zentrum des Rohrs führen, messbar. Inhomogenitäten im Strömungsprofil treten jedoch besonders an den Rändern auf.

Eine Lösung hierfür wird in der Patentschrift DE 19808642 C1 vorgeschlagen. Es werden Clamp-On-Ultraschallmesssensoren an einem fünf- bzw. mehreckigen Rohrstück (Spool Piece) statt an einem runden Rohrstück eingesetzt. Durch diese spezielle Anordnung verlaufen die Schallwege auch außerhalb des Zentrums des Rohres und durchlaufen somit auch Randbereiche des Strömungsprofils. Damit wird eine Messung von Off-Center-Pfadintegralen möglich.

Mit einem speziell geformten nicht runden Rohrstück und mit Reflektoren im Innern des Rohrstücks sind ebenfalls Pfadintergrale möglich, die nicht nur durch das Zentrum des Rohrstücks verlaufen (DE 4336370 C1). Die Reflektoren sind aufwendig gestaltet (DE 102013105922 A1) oder die Rohrinnenwand muss an genau berechneten Stellen mit Reflektorflächen präpariert werden (DE 102011079250 A1).

In GB 2 521 661 A wird ein Durchflussmesser mit verschiedenen SensorAnordnungen offenbart. Dabei wird akustische Strahlung ausgesendet und empfangen. Die Sensoren sind von außen um ein Rohr angeordnet. Es werden Messpfade entlang der Rohrmitte (on-axis) und außerhalb der Rohrmitte (off-axis) ausgewertet, um laminare, turbulente und Übergangszustände zu unterscheiden. Übergeordnete Zielstellung der Erfindung ist ein Durchflussmesser, der auch Mischphasen, Multiphase von Gas und Flüssigkeit, upstream and downstream messen kann. Eine Überwindung der Totalreflektion bei der Übermittlung der Ultraschallsignale vom Rohrinneren zum Ultraschallempfänger wird nicht thematisiert.

In US 2011/1 32102 A1 wird einen Durchflussmesser, der aus mindestens einem Ultraschallwandler und einer Auswerteeinheit besteht, offenbart. Der Ultraschallwandler respektive das Messrohr wird strukturell so präpariert, dass die senkrecht eingestrahlte Schallwelle beim Übergang einer Grenzschicht aus Anpassungsschicht/ Rohrwand/Messmedium gebrochen wird. Dies wird durch eine Kopplungsschicht realisiert. Die Kopplungsschicht ist eine Aussparung in der Rohrinnenwand, welche wiederum im Querschnitt die Form mehrere Dreieicke nebeneinander aufweist. Eine einfache und kostengünstige Realisierung von Zerstreuung und Kopplung der Ultraschallsignale ist nicht offenbart.

In DE 10 2004 053673 A1 wird ein Körper offenbart, welcher zur Messung in einem Ultraschall-Clamp-on-Durchflussmessverfahren verwendet wird, wobei der Körper länglich zylinderförmig ausgebildet ist mit einem Durchmesser kleiner als der Durchmesser des Prozessrohres zur Streuung des Ultraschallsignals im Rohrinneren. Der Körper ist nicht geeignet eine Totalreflexion zu verhindern.

### Darstellung der Erfindung

Der Erfindung liegt die Aufgabe zu Grunde, eine Anordnung und ein Verfahren zur Durchflussmessung bereitzustellen, welches die Nachteile des Standes der Technik beseitigt und darüber hinaus eine hohe Messgenauigkeit über einen großen Messbereich auch unter schwierigen Messbedingungen aufweist und eine Strömungsprofilkorrektur mit der zusätzlichen Messung von Off-Center-Schallpfaden durchführt. Weiterhin ist es Aufgabe der Erfindung einen Körper zur Realisierung der Messung von Off-Center-Schallpfaden bereitzustellen.

Die Aufgabe wird gelöst durch ein Verfahren zur Ultraschall-Clamp-on-Durchflussmessung mit einem von einem flüssigen oder gasförmigen Prozessmedium durchströmten Prozessrohr und umfassend Clamp-On-Ultraschallwandler. Durch das Verfahren werden sowohl Center-Schallpfade als auch Off-Center-Schallpfade berücksichtigt. Das Verfahren ist gekennzeichnet durch die folgenden Verfahrensschritte:
a. Einkoppeln von Ultraschallwellen in das Prozessrohr und in das Prozessmedium über wenigstens einen im Sendebetrieb arbeitenden Clamp-On-Ultraschallwandler.
b. Schallwellen, welche das Zentrum des Prozessrohres durchqueren, treffen auf der gegenüberliegenden Seite des im Sendebetrieb arbeitenden Clamp-On-Ultraschallwandlers auf wenigstens einen ersten Körper, welcher erfindungsgemäß im Inneren des Prozessrohres angeordnet ist,zur Realisierung der Messung von nicht durch das Zentrum des Prozessrohres verlaufenden Off-Center-Schallpfaden und werden dort in den gesamten Innenraum des Prozessrohres zerstreut.
c. Durch wenigstens einen zweiten Körper, welcher erfindungsgemäß innenwandig am Prozessrohr angeordnet ist, zur Realisierung der Messung von Off-Center-Schallpfaden wird eine Totalreflektion der zerstreuten Ultraschallwellen beim Grenzübergang der zerstreuten Ultraschallwellen vom Prozessmedium zum Prozessrohr verhindert, so dass die zerstreuten Ultraschallwellen das Prozessrohr verlassen können.
d. Schließlich werden ungestörte, das Zentrum des Rohres durchlaufende Ultraschallwellen der Center-Schallpfade durch mindestens einen ersten im Empfangsbetrieb arbeitenden Clamp-On-Ultraschallwandler empfangen. Die zerstreuten Ultraschallwellen der Off-Center-Schallpfade werden durch mindestens einen zweiten im Empfangsbetrieb arbeitenden Clamp-On-Ultraschallwandler empfangen.

Erfindungsgemäß sind die Körper, also der wenigstens eine erste Körper und der wenigstens eine zweite Körper, länglich zylinderförmig ausgebildet mit einem Durchmesser kleiner als der Durchmesser des Prozessrohres (1).

Um die Ultraschall-Clamp-On-Durchflussmessung an verschiedene Prozessmedien mit ihren unterschiedlichen Schallgeschwindigkeiten anzupassen, können die Clamp-On-Ultraschallsensoren in der Längsachse des Prozessrohres auf der Rohraußenseite verschoben werden. Durch eine längliche, zylindrische oder teilzylindrische Form der Körper zur Realisierung der Messung von Off-Center-Schallpfaden bleibt eine Zuordnung der Clamp-On-Ultraschallsensoren zu den Körpern erhalten, da diese in Längsrichtung an der Rohrinnenwand angeordnet sind.

Die Aufgabe wird auch gelöst durch eine Anordnung zur Ultraschall-Clamp-on-Durchflussmessung umfassend ein von einem flüssigen oder gasförmigen Prozessmedium durchströmten Prozessrohr und umfassend Clamp-On-Ultraschallwandler mit mindestens einem Schallwandlerpaar, bestehend aus einem im Sendebetrieb arbeitenden Clamp-On-Ultraschallwandler und einem ersten im Empfangsbetrieb arbeitenden Clamp-On-Ultraschallwandler. Das Schallwandlerpaar wird zur Messung von ungestörten, das Zentrum des Rohres durchlaufenden Schallpfaden, sogenannten Center-Schallpfaden, verwendet. Die Clamp-On-Ultraschallwandler sind am Prozessrohr befestigt.

Mindestens ein zweiter im Empfangsbetrieb arbeitender Clamp-On-Ultraschallwandler ist am Prozessrohr angeordnet. Dieser empfängt Schallpfade, welche nicht durch das Zentrum des Prozessrohres, sogenannte Off-Center-Schallpfade, verlaufen. Erfindungsgemäß sind mindestens zwei Körper zur Realisierung der Messung von Off-Center-Schallpfaden innenwandig am Prozessrohr angeordnet, wobei mindestens ein Körper zur Realisierung der Messung von Off-Center-Schallpfaden im Prozessrohr einem im Sendebetrieb arbeitenden Clamp-On-Ultraschallwandler diagonal gegenüberliegend angeordnet ist, um die dort ankommenden Schallwellen im gesamten Innenraum des Prozessrohres zu zerstreuen. Der zweite Körper zur Realisierung der Messung von Off-Center-Schallpfaden ist im Prozessrohr vor dem zweiten im Empfangsbetrieb arbeitenden Clamp-On-Ultraschallwandler angeordnet, um einen Teil der zerstreuten Schallwellen aufzunehmen und über die Rohrwand des Prozessrohres dem zweiten im Empfangsbetrieb arbeitenden Clamp-On-Ultraschallempfänger zuzuführen. Erfindungsgemäß sind die mindestens zwei Körper länglich zylinderförmig mit einem Durchmesser kleiner als der Durchmesser des Prozessrohres.

Vorteilhafterweise sind die verwendeten Clamp-On-Ultraschallwandler sowohl im Empfangsbetrieb arbeitende Clamp-On-Ultraschallwandler als auch im Sendebetrieb arbeitende Clamp-On-Ultraschallwandler.

Die Aufgabe wird weiterhin durch Körper zur Realisierung einer Messung von Off-Center-Schallpfaden bei einer Ultraschall-Clamp-on-Durchflussmessung gelöst. Der erfindungsgemäße Körper ist entlang einer Längsachse eines Prozessrohres angeordnet. Bevorzugt ist der längliche Körper zylindrisch oder teilzylindrisch oder rohrförmig ausgebildet, wobei sein Durchmesser kleiner ist als der Durchmesser des Prozessrohres. Der erfindungsgemäße Körper ist in den Ausführungsbeispielen vollrohrförmig oder halbrohrförmig ausgebildet.

Der Körper ist in einem weiteren Ausführungsbeispiel als Vollmaterial ausgebildet oder kann mit einem flüssigen oder gasförmigen Medium gefüllt sein.

Durch eine nichtlösbare Verbindung, beispielsweise einer Schweiß-, Klebe- und/oder Nietverbindung ist der Körper innenwandig am Prozessrohr befestigt.

Die Körper zur Realisierung der Messung von Off-Center-Schallpfaden können in einem einfachen Spool-Piece, dessen Grundelement eine gerade Standard-Einbau-Rohrarmatur ist, integriert werden. Dadurch kann ein universelles Ultraschall- Clamp-On Verfahren mit dem Spool-Piece kombiniert werden.

Die Form und Ausrichtung der erfindungsgemäßen Körper entlang des Rohres erlaubt einen universellen Einsatz für alle runden Standard-Prozessrohre. Durch axiales Verschieben der Clamp-On-Ultraschallwandler entlang des Prozessrohres auf der Rohraußenwand in axialer Richtung kann die gesamte Anordnung auf alle Prozessmedien mit unterschiedlichen Schallgeschwindigkeiten angepasst werden. Durch die längliche Form der Körper zur Realisierung der Messung von Off-Center-Schallpfaden geht die Wirkung der Körper bei der axialen Verschiebung der Clamp-On-Ultraschallwandler entlang des Prozessrohres nicht verloren.

Die Körper der erfindungsgemäßen Anordnung ermöglichen, dass Off-Center-Schallpfade in ein Prozessmedium ein- und ausgekoppelt werden. Diese Off-Center-Schallpfade erlauben neben der herkömmlichen Abtastung der Schallpfade, welche durch das Zentrum des Prozessrohres führen, eine zusätzliche Abtastung des Strömungsprofils. Damit ist eine genaue Messung eines Volumenflusses des Prozessmediums mit einem Laufzeitdifferenzverfahren möglich.

### Ausführung der Erfindung

Nachstehend wird die Erfindung anhand von Ausführungsbeispielen näher erläutert. Es zeigen
Fig. 1 Schema einer Anordnung zur Ultraschall-Clamp-On-Durchflussmessung mit drei Clamp-On-Ultraschallwandlern und zwei Körpern zur Realisierung einer Messung von Off-Center-Schallpfaden, Schnittdarstellung durch das Prozessrohr,
Fig. 2a Schema einer Anordnung zur Ultraschall-Clamp-On-Durchflussmessung mit vier Clamp-On-Ultraschallwandlern und vier Körpern zur Realisierung der Messung von Off-Center-Schallpfaden, Schnittdarstellung durch das Prozessrohr,
Fig. 2b Schema einer Anordnung zur Ultraschall-Clamp-On-Durchflussmessung mit vier Clamp-On-Ultraschallwandlern und vier Körpern zur Realisierung der Messung von Off-Center-Schallpfaden, perspektivische Darstellung entlang des Prozessrohres,
Fig. 2c Schema einer Anordnung zur Ultraschall-Clamp-On-Durchflussmessung mit vier Clamp-On-Ultraschallwandlern und zwei Körpern zur Realisierung der Messung von Off-Center-Schallpfaden, Schnittdarstellung durch das Prozessrohr,
Fig. 2d Schema einer Anordnung zur Ultraschall-Clamp-On-Durchflussmessung mit vier Clamp-On-Ultraschallwandlern und vier Körpern zur Realisierung der Messung von Off-Center-Schallpfaden mit einem ungestörten Center-Schallpfad, Schnittdarstellung durch das Prozessrohr,
Fig. 3 Körper zur Realisierung der Messung von Off-Center-Schallpfaden in unterschiedlichen Ausführungen.

Die erfindungsgemäße Anordnung zur Ultraschall-Clamp-On-Durchflussmessung umfasst ein Prozessrohr 1 gefüllt mit einem Prozessmedium 2, mindestens drei Clamp-On-Ultraschallwandler U, welche als Sender und/oder Empfänger ausgebildet sind, und mindestens zwei Körper K zur Realisierung einer Messung von Off-Center-Schallpfaden 32. Die Clamp-On-Ultraschallwandler U befinden sich dabei außerhalb eines Prozessrohres 1 an dessen Rohraußenwand. Die Körper K zur Realisierung der Messung von Off-Center-Schallpfaden 32 sind im Inneren des Prozessrohres 1 an dessen Innenwand angeordnet. Die Anordnung ist bevorzugt in Form eines Spool Piece ausgebildet, wobei das Prozessrohr 1 in der Regel einen runden Querschnitt aufweist.

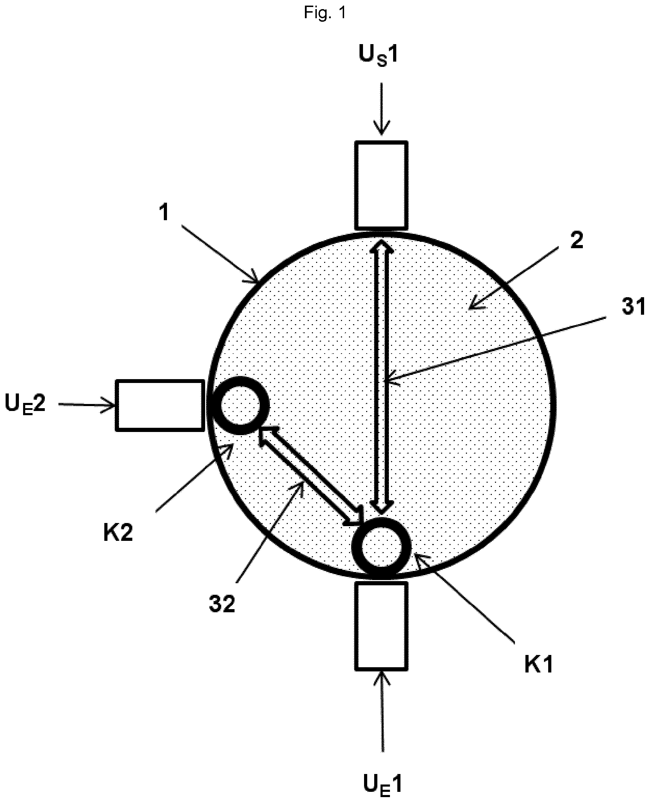

Figur 1 zeigt ein Schema der erfindungsgemäßen Anordnung zur Ultraschall-Clamp-On-Durchflussmessung mit drei Clamp-On-Ultraschallwandlern U, wobei mindestens ein Clamp-On-Ultraschallwandler ein im Sendebetrieb arbeitender Clamp-On-Ultraschallwandler U_{S}1 ist und zwei weitere im Empfangsbetrieb arbeitende Clamp-On-Ultraschallwandler U_{E}1, U_{E}2 sind. Es sind weiterhin zwei als längliche Rohre ausgebildete Körper K zur Realisierung der Messung von Off-Center-Schallpfaden 32 in unterschiedlichen Winkeln, beispielsweise 180° und 270°, an der Rohrinnenwand axial angeordnet. Die Clamp-On-Ultraschallwandler U sind am Prozessrohr 1 außenwandig in der Art angeordnet, dass der im Sendebetrieb arbeitende Clamp-On-Ultraschallwandler U_{S}1 dem ersten im Empfangsbetrieb arbeitender Clamp-On-Ultraschallwandler U_{E}1 gegenüberliegend angeordnet ist, so dass zwischen den Clamp-On-Ultraschallwandlern U_{S}1 und U_{E}1 eine Ein-Pfad-Anordnung realisiert ist. Wie bei einer Anordnung ohne Körper K zur Realisierung der Messung von Off-Center-Schallpfaden 32 werden Schallwellen durch den Mittelpunkt des Prozessrohres 1 gesendet und empfangen, sogenannte Center-Schallpfade 31. Am Prozessrohr 1 befindet sich parallel zur Rohrwand verlaufend an der Innenwand des Prozessrohres 1 am Clamp-On-Ultraschallwandlers U_{E}1 ein erster Körper K1 zur Realisierung der Messung von Off-Center-Schallpfaden 32, durch welchen die dort ankommenden Schallwellen der Center-Schallpfade 31 zerstreut und in den gesamten Raumwinkel des Rohrinneren abgestrahlt werden. Ein Teil der zerstreuten Schallwellen, sogenannte Off-Center-Schallpfade 32, gelangen zum zweiten Körper K2. An der Außenwand des Prozessrohres 1 ist dem zweiten Körper K2 zur Realisierung der Messung von Off-Center-Schallpfaden 32 ein zweiter Clamp-On-Ultraschallwandler U_{E}2 im Empfangsbetrieb zugeordnet. Der zweite Körper K2 nimmt die Off-Center-Schallwellen 32 auf. Es wird dadurch eine Totalreflektion der Ultraschallwellen beim Grenzübergang der Schallwellen von dem Prozessmedium 2 zum Prozessrohr 1 verhindert, so dass die zerstreuten Schallwellen das Prozessrohr 1 verlassen können, um vom zweiten Clamp-On-Ultraschallwandler U_{E}2 detektiert werden zu können.

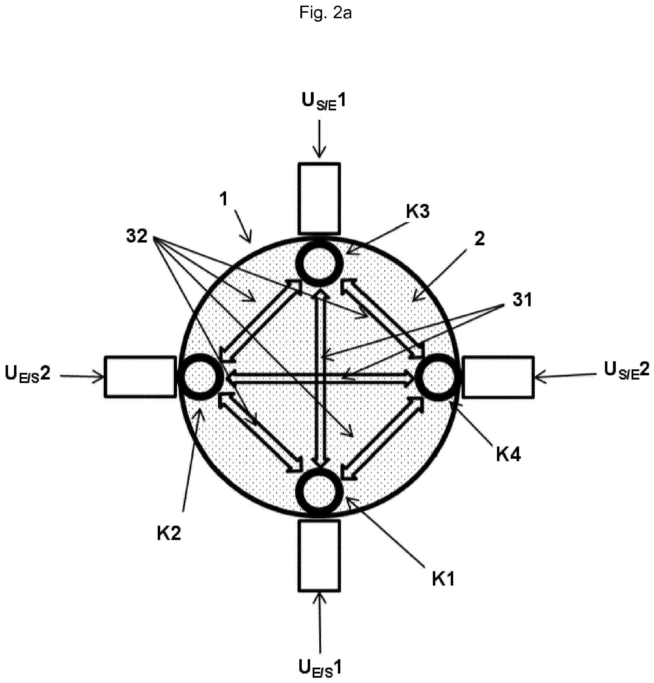

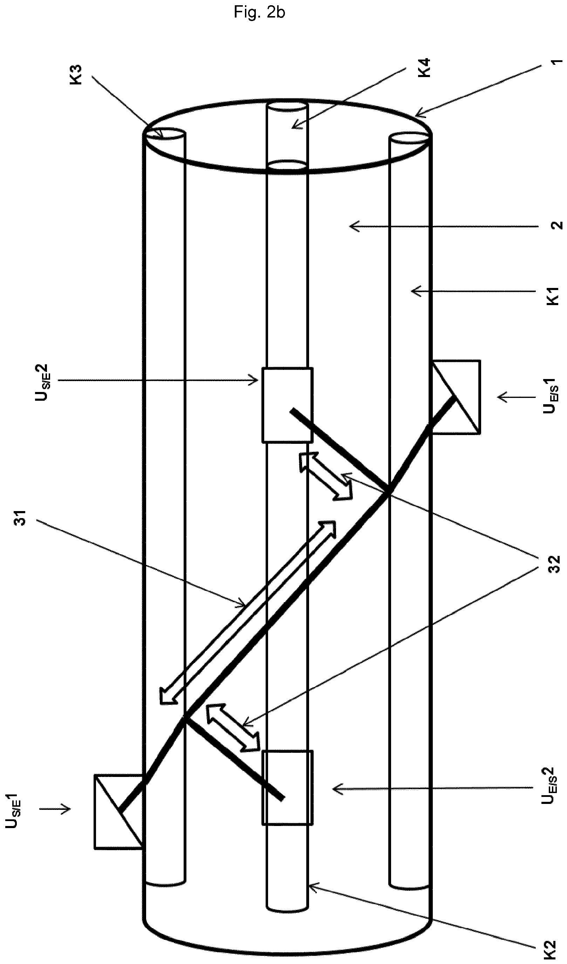

Figur 2a und 2b zeigen den erfindungsgemäßen Off Center Spool Piece mit vier Clamp-On-Ultraschallwandlern U und vier röhrenförmigen Körper K zur Realisierung der Messung von Off-Center-Schallpfaden 32. Figur 2a zeigt die Schnittdarstellung durch das Prozessrohr 1. Die Clamp-On-Ultraschallwandler U, welche in dieser Ausführungsform im Empfangsbetrieb arbeitende Clamp-On-Ultraschallwandler U_{E/S} und im Sendebetrieb arbeitende Clamp-On-Ultraschallwandler U_{S/E} zugleich sein können, sind auf der Außenwand des Prozessrohres 1 gegenüberliegend angeordnet, wobei sich die folgenden Paare gegenüberliegen: Clamp-On-Ultraschallwandler U_{S/E}1 und Clamp-On-Ultraschallwandler U_{E/S}1, Clamp-On-Ultraschallwandler U_{S/E}2 und Clamp-On-Ultraschallwandler U_{E/S}2. Innerhalb des Prozessrohres 1 sind die vier Körper K axial angeordnet, wobei diese parallel zur Rohrwand verlaufend beispielsweise in den Winkeln 0°, 90°, 180° und 270° an der Innenwand des Prozessrohres 1 angeordnet sind. Jedem Körper K zur Realisierung der Messung von Off-Center-Schallpfaden 32 ist ein Clamp-On-Ultraschallwandler U zugeordnet, wobei sich der Körper K1 am Clamp-On-Ultraschallwandler U_{E/S}1, der Körper K2 am Clamp-On-Ultraschallwandler U_{E/S}2, der Körper K3 am Clamp-On-Ultraschallwandler U_{S/E}1 und der Körper K4 am Clamp-On-Ultraschallwandler U_{S/E}2 befindet. Durch diese Anordnung werden neben den Center-Schallpfaden 31, welche die gegenüberliegenden Clamp-On-Ultraschallwandlerpaare U_{S/E}1/U_{E/S}1 und U_{S/E}2/U_{E/S}2 bilden, auch Off-Center-Schallpfade 32 gemessen. In der perspektivischen Darstellung in Figur 2b sind die entsprechenden Center-Schallpfade 31 und Off-Center-Schallpfade 32 zwischen den Clamp-On-Ultraschallwandlern U schematisch entlang der Längsachse eines Prozessrohres 1 eingezeichnet.

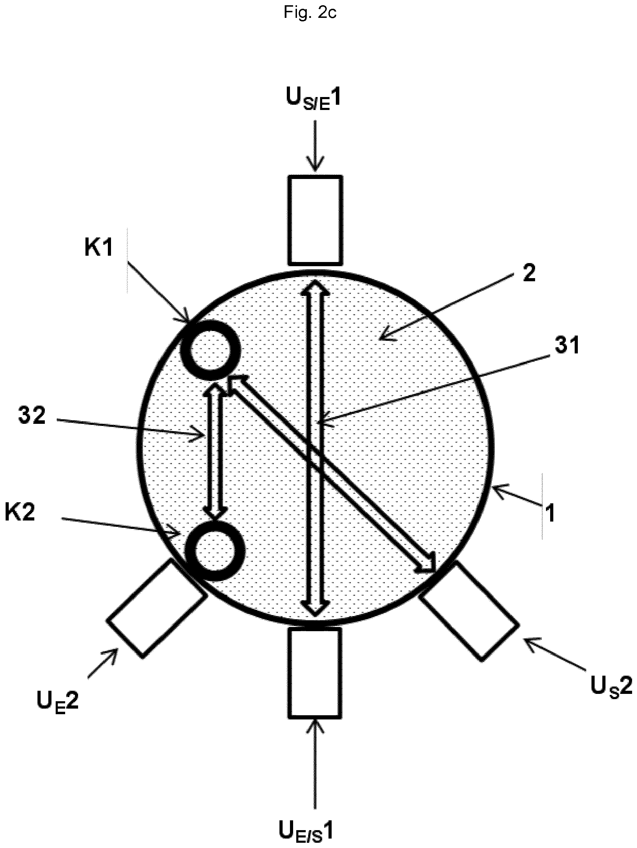

Eine einfache und robuste Anordnung zeigt Figur 2c. Das Clamp-On-Ultraschallwandlerpaar U_{S/E}1/U_{E/S}1 misst ausschließlich Center-Schallpfade 31. Entlang dieser Center-Schallpfade 3 sind keine Körper K zur Realisierung der Messung von Off-Center-Schallpfaden 32 angeordnet. Für die Messung von Off-Center-Schallpfaden 32 in dieser Anordnung wird das Clamp-On-Ultraschallwandlerpaar U_{E}2/U_{S}2 eingesetzt. Die Off-Center-Schallpfade 32 werden durch den Körper K1, welcher die Schallsignale des Clamp-On-Ultraschallwandlers Us2 im Rohrinneren 2 zerstreut, erzeugt und vom Körper K2 aufgenommen, wodurch der Clamp-On-Ultraschallwandler U_{E}2, welcher dem Körper K2 zur Realisierung der Messung von Off-Center-Schallpfaden 32 zugeordnet ist, die Off-Center-Schallpfade 32 detektieren kann.

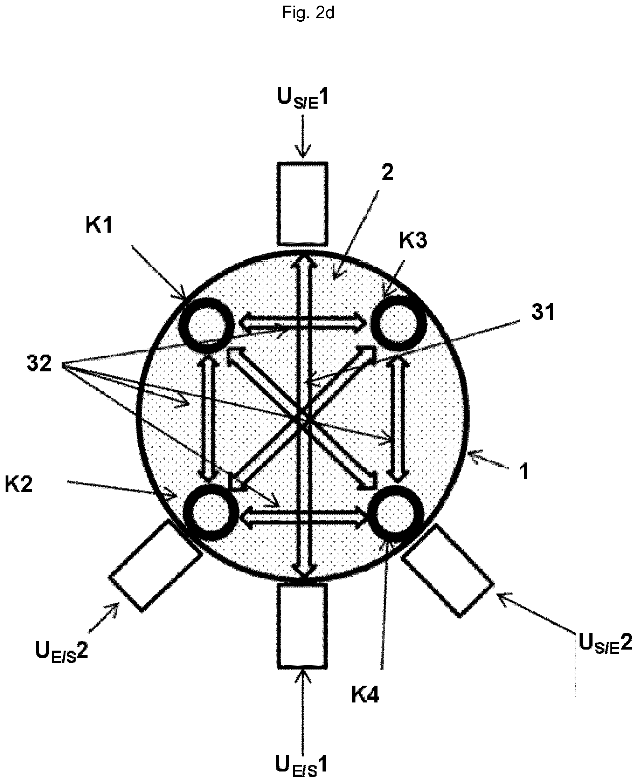

Figur 2d zeigt eine weitere Anordnung ähnlich wie Figur 2c. Hier sind zusätzlich zwei weitere Körper K angeordnet. Das Konzept, dass Center-Schallpfade 31 des Clamp-On-Ultraschallwandlerpaares U_{S/E}2/U_{E/S}2 nicht durch Körper K zur Realisierung der Messung von Off-Center-Schallpfaden 32 gestört werden, bleibt erhalten. Die zusätzlichen Körper K3 und K4 erlauben die Messung mehrerer Off-Center-Schallpfade 32 durch die Clamp-On-Ultraschallwandler U_{S/E}2/U_{E/S}2.

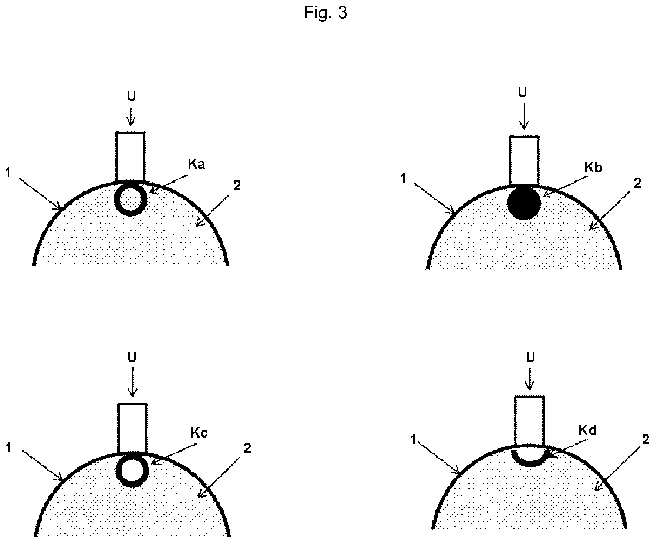

In Figur 3 sind unterschiedliche Ausführungsformen von Körpern K zur Realisierung der Messung von Off-Center-Schallpfaden 32 dargestellt, wobei der Körper Ka als Rohr gefüllt mit Prozessmedium 2, der Körper Kb als Stab aus Vollmaterial, z.B. Stahl, der Körper Kc als Rohr gefüllt mit Luft und der Körper Kd als Halbrohr gefüllt mit Luft ausgeführt ist. Weitere Halbrohrausführungen gefüllt mit Prozessmedium 2 oder als Vollmaterial sind denkbar, jedoch hier nicht abgebildet.

### Bezugszeichenliste

- 1: Prozessrohr
- 2: Prozessmedium
- 3: Schallpfade
31 Center-Schallpfade
32 Off-Center-Schallpfade
- K: Körper zur Realisierung der Messung von Off-Center-Schallpfaden 32 (K1, K2, K3, K4)
Ka Körper als Rohr gefüllt mit Prozessmedium 2
Kb Körper als Stab aus Vollmaterial
Kc Körper als Rohr gefüllt mit Luft
Kd Körper als Halbrohr gefüllt mit Luft
- U: Ultraschallwandler
U_{S} im Sendebetrieb arbeitende Clamp-On-Ultraschallwandler (U_{S}1)
U_{E} im Empfangsbetrieb arbeitende Clamp-On-Ultraschallwandler (U_{E}1, U_{E}2)
U_{S/E}/U_{E/S} im Sende- und Empfangsbetrieb arbeitende Clamp-On-Ultraschallwandler (U_{E/S}1, U_{S/E}1, U_{E/S}2, U_{S/E}2)

## Patentansprüche

1. Verfahren zur Ultraschall-Clamp-on-Durchflussmessung umfassend ein von einem flüssigen oder gasförmigen Prozessmedium (2) durchströmtes Prozessrohr (1), wobei Center-Schallpfade (31) und Off-Center-Schallpfade (32) berücksichtigt werden, und umfassend Clamp-On-Ultraschallwandler (U), **gekennzeichnet durch** folgende Verfahrensschritte:
a) Einkoppeln von Ultraschallwellen in das Prozessrohr (1) und in das Prozessmedium (2) über einen im Sendebetrieb arbeitenden Clamp-On-Ultraschallwandler (U_{S}),
b) Zerstreuen der Ultraschallwellen im Prozessrohr (1) durch wenigstens einen ersten Körper (K1) zur Realisierung einer Messung von Off-Center-Schallpfaden (32), welcher im Inneren des Prozessrohres (1) angeordnet ist,
c) Verhinderung einer Totalreflektion der zerstreuten Ultraschallwellen beim Grenzübergang der zerstreuten Ultraschallwellen vom Prozessmedium (2) zum Prozessrohr (1) durch wenigstens einen zweiten Körper (K2), welcher innenwandig am Prozessrohr (1) angeordnet ist, zur Realisierung der Messung von Off-Center-Schallpfaden (32), so dass die zerstreuten Ultraschallwellen das Prozessrohr (1) verlassen können
d) Empfangen von ungestörten Ultraschallwellen der Center-Schallpfade (31) durch mindestens einen ersten im Empfangsbetrieb arbeitenden Clamp-On-Ultraschallwandler (U_{E}1) und Empfangen von zerstreuten Ultraschallwellen der Off-Center-Schallpfade (32) durch mindestens einen zweiten im Empfangsbetrieb arbeitenden Clamp-On-Ultraschallwandler (U_{E}2),
wobei die Körper (K1, K2) länglich zylinderförmig und/oder rohrförmig ausgebildet sind mit einem Durchmesser kleiner als der Durchmesser des Prozessrohres (1).

2. Verfahren nach Anspruch 1, **dadurch gekennzeichnet, dass** die Clamp-On-Ultraschallwandler (U) entlang des Prozessrohres (1) axial verschoben werden, wobei die Körper (K) zur Realisierung der Messung von Off-Center-Schallpfaden (32) eine längliche Form aufweisen.

3. Anordnung zur Ultraschall-Clamp-on-Durchflussmessung umfassend ein von einem flüssigen oder gasförmigen Prozessmedium (2) durchströmtes Prozessrohr (1) und umfassend Clamp-On-Ultraschallwandler (U) mit mindestens einem Schallwandlerpaar, bestehend aus einem im Sendebetrieb arbeitenden Clamp-On-Ultraschallwandler (U_{S}) und einem im Empfangsbetrieb arbeitenden Clamp-On-Ultraschallwandler (U_{E}1), zur Messung von Center-Schallpfaden (31), wobei mindestens ein weiterer, im Empfangsbetrieb arbeitender Clamp-On-Ultraschallwandler (U_{E}2) zur Messung von Off-Center-Schallpfaden (32) am Prozessrohr (1) angeordnet ist, **dadurch gekennzeichnet, dass**
mindestens zwei Körper (K) zur Realisierung der Messung von Off-Center-Schallpfaden (32) innenwandig, entlang der Längsachse am Prozessrohr (1) angeordnet sind, wobei die mindestens zwei Körper (K) länglich zylinderförmig und/oder rohrförmig ausgebildet sind mit einem Durchmesser kleiner als der Durchmesser des Prozessrohres (1).

4. Anordnung nach Anspruch 3, **dadurch gekennzeichnet, dass** mindestens ein erster Körper (K1) im Prozessrohr (1) dem im Sendebetrieb arbeitenden Clamp-On-Ultraschallwandler (Us) diagonal gegenüberliegend angeordnet ist und mindestens ein zweiter Körper (K2) im Prozessrohr (1) vor dem weiteren im Empfangsbetrieb arbeitenden Clamp-On-Ultraschallwandler (U_{E}2) angeordnet ist.

5. Anordnung nach Anspruch 3, **dadurch gekennzeichnet, dass** die Clamp-On-Ultraschallwandler (U) zugleich im Empfangsbetrieb arbeitende Ultraschallwandler und im Sendebetrieb arbeitende Ultraschallwandler (U_{E/S}/U_{S/E}) sind.

## Claims

1. Method for ultrasonic clamp-on flow measurement, comprising a process pipe (1) through which a liquid or gaseous process medium (2) flows, wherein centre sound paths (31) and off-centre sound paths (32) are taken into account, and comprising clamp-on ultrasonic transducers (U), **characterized by** the following method steps:
a) injecting ultrasonic waves into the process pipe (1) and into the process medium (2) via a clamp-on ultrasonic transducer (U_{S}) operating in transmitting mode,
b) dispersing the ultrasonic waves in the process pipe (1) by at least one first body (K1) for realizing a measurement of off-centre sound paths, which is arranged in the interior of the process pipe (1),
c) preventing a total reflection of the dispersed ultrasonic waves when the dispersed ultrasonic waves cross a boundary from the process medium (2) to the process pipe (1) by at least one second body (K2), which is arranged on an inner wall of the process pipe (1), for realizing the measurement of off-centre sound paths (32), so that the dispersed ultrasonic waves can leave the process pipe (1),
d) receiving undisturbed ultrasonic waves of the centre sound paths (31) by at least one first clamp-on ultrasonic transducer (U_{E}1) operating in receiving mode and receiving dispersed ultrasonic waves of the off-centre sound paths (32) by at least one second clamp-on ultrasonic transducer (U_{E}2) operating in receiving mode.
wherein the bodies (K1, K2) are formed in an elongated cylindrical and/or a tubular manner, with a diameter smaller than the diameter of the process pipe (1).

2. Method according to Claim 1, **characterized in that** the clamp-on ultrasonic transducers (U) are displaced axially along the process pipe (1), wherein the bodies (K) for realizing the measurement of off-centre sound paths (32) have an elongated shape.

3. Arrangement for ultrasonic clamp-on flow measurement, comprising a process pipe (1) through which a liquid or gaseous process medium (2) flows and comprising at least one clamp-on ultrasonic transducer pair (U), made up of a clamp-on ultrasonic transducer (U_{S}) operating in transmitting mode and a clamp-on ultrasonic transducer (U_{E}1) operating in receiving mode, for measuring centre sound paths (31), wherein at least one further clamp-on ultrasonic transducer (U_{E}2) operating in receiving mode for measuring off-centre sound paths (32) is arranged on the process pipe (1), **characterized in that**
at least two bodies (K) for realizing the measurement of off-centre sound paths (32) are arranged on the inner wall, along the longitudinal axis, of the process pipe (1), wherein the at least two bodies (K) are formed in an elongated cylindrical and/or a tubular manner, with a diameter smaller than the diameter of the process pipe (1).

4. Arrangement according to Claim 3, **characterized in that** at least one first body (K1) is arranged in the process pipe (1) diagonally opposite the clamp-on ultrasonic transducer (U_{S}) operating in transmitting mode, and at least one second body (K2) is arranged in the process pipe (1) upstream of the further clamp-on ultrasonic transducer (U_{E}2) operating in receiving mode.

5. Arrangement according to Claim 3, **characterized in that** the clamp-on ultrasonic transducers (U) are ultrasonic transducers operating in receiving mode and at the same time ultrasonic transducers operating in transmitting mode (U_{E/S}/U_{S/E}).

## Revendications

1. Procédé non intrusif de mesure du débit par ultrasons à l'aide d'une conduite de processus (1), à travers laquelle s'écoule un fluide de processus liquide ou gazeux (2), les trajets du son centrés (31) et les trajets du son excentrés (32) étant pris en compte, et à l'aide de capteurs clamp-on ultrasonores (U), **caractérisé par** les étapes suivantes :
a) l'injection d'ondes ultrasonores dans la conduite de processus (1) et dans le fluide de processus (2) par le biais d'un capteur clamp-on ultrasonore fonctionnant en mode émission (U_{S}),
b) la dispersion des ondes ultrasonores dans la conduite de processus (1) par le biais d'au moins un premier corps (K1) destiné à effectuer une mesure de trajets du son excentrés (32), lequel corps est disposé à l'intérieur de la conduite de processus (1),
c) le fait d'empêcher une réflexion totale des ondes ultrasonores dispersées au niveau du passage des ondes ultrasonores dispersées du fluide de processus (2) à la conduite de processus (1) par le biais d'au moins un deuxième corps (K2), disposé à la paroi intérieure de la conduite de processus (1), pour effectuer la mesure de trajets du son excentrés (32) de sorte que les ondes ultrasonores dispersées puissent quitter la conduite de processus (1),
d) la réception des ondes ultrasonores non perturbées des trajets du son centrés (31) au moyen d'au moins un premier capteur clamp-on ultrasonore fonctionnant en mode réception (U_{E}1) et la réception des ondes ultrasonores dispersées des trajets du son excentrés (32) au moyen d'au moins un deuxième capteur clamp-on ultrasonore fonctionnant en mode réception (U_{E}2),
les corps (K1, K2) ayant une forme allongée cylindrique et/ou tubulaire avec un diamètre inférieur au diamètre de la conduite de processus (1).

2. Procédé selon la revendication 1, **caractérisé en ce que**
les capteurs clamp-on ultrasonores (U) sont déplacés axialement le long de la conduite de processus (1), les corps (K) destinés à effectuer la mesure de trajets du son excentrés (32) ayant une forme allongée.

3. Dispositif non intrusif de mesure du débit par ultrasons comprenant une conduite de processus (1) traversée par un fluide de processus liquide ou gazeux (2) et comprenant d'au moins une paire de capteurs clamp-on ultrasonores (U), comprenant un capteur clamp-on ultrasonore fonctionnant en mode émission (U_{S}) et un capteur clamp-on ultrasonore fonctionnant en mode réception (U_{E}1), pour mesurer les trajets du son centrés (31), au moins un autre capteur clamp-on ultrasonore fonctionnant en mode réception (U_{E}2) étant disposé sur la conduite de processus (1) pour mesurer des trajets du son excentrés (32), **caractérisé en ce que**
au moins deux corps (K) sont disposés à la paroi intérieure de la conduite de processus (1), le long de l'axe longitudinal, pour effectuer la mesure de trajets du son excentrés (32), les au moins deux corps (K) ayant une forme allongée cylindrique et/ou tubulaire avec un diamètre inférieur au diamètre de la conduite de processsus (1).

4. Dispositif selon la revendication 3, **caractérisé en ce qu'**au moins un premier corps (K1) est disposé dans la conduite de processus (1) diagonalement en face du capteur clamp-on ultrasonore fonctionnant en mode émission (U_{S}) et au moins un deuxième corps (K2) est disposé dans la conduite de processus (1) en avant de l'autre capteur clamp-on ultrasonore fonctionnant en mode réception (U_{E}2).

5. Dispositif selon la revendication 3, **caractérisé en ce que**
les capteurs clamp-on ultrasonores (U) sont à la fois des capteurs clamp-on ultrasonores fonctionnant en mode réception et des capteurs clamp-on ultrasonores fonctionnant en mode émission (U_{E/S}/U_{S/E}).
